(19) Europäisches Patentamt

European Patent Office

Office européen des brevets

(11) EP 1 478 147 A2

(12) EUROPEAN PATENT APPLICATION

(43) Date of publication:
17.11.2004 Bulletin 2004/47

(51) Int Cl.⁷: H04L 27/22

(21) Application number: 04010188.3

(22) Date of filing: 29.04.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 13.05.2003 KR 2003030300

(71) Applicant: LG ELECTRONICS INC.
Seoul (KR)

(72) Inventor: Seok II, Chang
Gyeonggi-Do (KR)

(74) Representative: von Hellfeld, Axel, Dr. Dipl.-Phys.
Wuesthoff & Wuesthoff
Patent- und Rechtsanwälte
Schweigerstrasse 2
81541 München (DE)

(54) **QPSK demodulation with soft outputs for third generation TDD systems**

(57) A QPSK demodulation method and apparatus for a soft output in a 3G TDD HCR/LCR system calculates a position of a receiving symbol on a constellation and phase shifts the calculated symbol position. The phase shifted symbol position is then calculated, and the result is amplitude compensated. A soft output of an I component is calculated by subtracting an I component value and Q component value of the calculated symbol position, and a soft output of a Q component is calculated by adding I component value and Q component value. Thus, soft outputs of receiving bit data can be obtained from a simple calculation in QPSK demodulation of the TDD system.

## FIG. 6

START

S10 — CALCULATE POSITION OF RECEIVING SYMBOL ON CONSTELLATION

S12 — PHASE-SHIFT CALCULATED SYMBOL POSTION

S14 — CALCULATE POSITION OF PHASE-SHIFTED SYMBOL

S16 — COMPENSATE AMPLITUDE OF CALCULATED I' AND Q' COMPONENTS

END

EP 1 478 147 A2

**Description**

**BACKGROUND OF THE INVENTION**

1. Field of the Invention.

The present invention generally relates to communication systems, and more particularly to a system and method for performing QPSK modulation in a 3G TDD (3 Generation Time Division Duplexing) system.

2. Description of the Related Art.

A 3G TDD HCR (High Chip Rate)/LCR (Low Chip Rate) system usually employs a QPSK (Quadrature Phase Shift Keying) modulation to transmit a signal. This modulation is carried out as follows.

When bit data generated through a physical channel mapping procedure are QPSK modulated, two bits are mapped to one QPSK symbol. Each user burst (that is, the modulated symbol) used in the TDD HCR/LCR consists two data parts (i=1,2) and can be expressed as data blocks of equation (1) shown below:

$$\underline{d}^{(k,i)} = \left(\underline{d}_1^{(k,i)}, \underline{d}_2^{(k,i)}, ..., \underline{d}_{N_k}^{(k,i)}\right)^T, \text{ i=1,2; k=1,...,K}_{code} \tag{1}$$

A radio frame used for the 3G TDD consists of two sub-frames, one sub-frame includes a plurality of time slots. A first time slot includes two data fields and a midamble field positioned between the data fields.

In Equation (1), K code indicates the number of codes used per time slot and 16 can be its maximum value, Nk indicates the number of symbols per data field, which is related to a spreading factor. The data block $\underline{d}^{(k,1)}$ is positioned before the midamble (serving as a training sequence) and the data block $\underline{d}^{(k,2)}$ is positioned after the midamble. In case of the QPSK modulation, symbols ($\underline{d}_n^{(k,i)}$) are generated from 2 bit data, which have been generated through the physical channel mapping procedure.

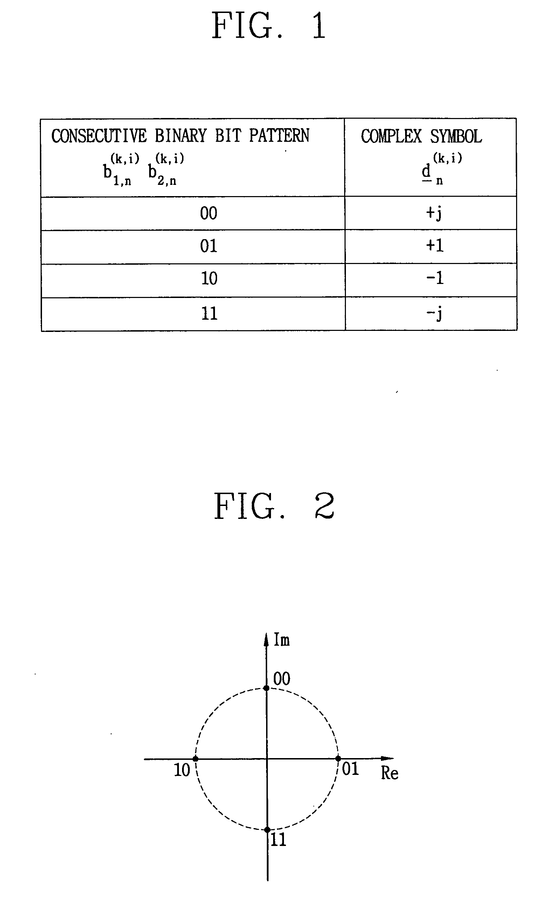

Figure 1 is a table showing how bit data are mapped to QPSK symbols. In this table, a bit pattern 00 is mapped to a symbol +j, and a bit pattern 01 is mapped to +1. Also, a bit pattern 10 is mapped to -1 and a bit pattern 11 is mapped to -j.

Figure 2 illustrates a QPSK symbol constellation used in TDD HCR/LCR. In this constellation, bit data 00 mapped to symbol +j and bit data 11 mapped to -j are located on an Im (Imaginary) axis. Bit data 01 mapped to +1 and bit data 10 mapped to -1 are located on a Re (real) axis. Upon receiving a QPSK-modulated symbol, a receiving unit performs QPSK demodulation. QPSK demodulation includes a hard decision method and a soft decision method.

The hard decision method demodulates one QPSK symbol to 2 bits. This involves searching a symbol closest to a received signal on the constellation and de-mapping the searched symbol to 2-bit data with reference to the table of Figure 1.

The soft decision method generates a soft output. This output is not a simple 2 bits but a soft value. More specifically, an output of the soft decision is expressed in a certain few bits according to a system, which refers to a fixed point output of a few bits which hold as many characteristics as possible of a receiving symbol. The demodulated output is input into a channel decoder through a certain procedure.

Generally, the channel decoder exhibits better performance for a soft input than for a hard input. This is because in the case of a hard decision, the characteristics of a receiving symbol are damaged. As a result, a hard output holds less characteristics of the receiving symbol than a soft decision. In other words, since the soft input bears a maximum number of characteristics of a receiving signal, it can be used for channel decoding. Thus, in case of generally used repeated decoding, the soft input results in excellent performance.

It is therefore preferable for the receiving unit to demodulate a receiving signal using the soft decision method. That is, the receiving unit requests a soft output for enhancement of a channel decoding performance. However, in view of the characteristics of the symbol constellation used for TDD HCR/LCR as shown in Fig. 2, the receiving unit cannot directly extract a soft output. In addition, in a minimum symbol distance method commonly used for general MPSK (Multiple Phase Shift Keying) demodulation, respective distances between a receiving symbol and all the symbols of the constellation are measured. Then, the closest symbol is used to generate a soft output. Thus, the soft output generation process is too complicated and too many calculation processes are required in order to be adopted for use in TDD HCR/LCR.

## SUMMARY OF THE INVENTION

An object of the present invention is to solve one or more problems of the related-art and/or to achieve at least one of the following advantages.

Another object of the present invention is to provide a QPSK demodulation method and apparatus for a soft output in a 3G TDD system which simplifies the demodulation calculation process and enhances channel decoding performance by extracting a soft output using a simple calculation in QPSK demodulation in TDD HCR/LCR.

To achieve these and other objects and advantages, the present invention provides a method for performing QPSK demodulation for a soft output in a 3G TDD system which in accordance with one embodiment includes calculating a position of a receiving symbol on a constellation, generating a difference value between a calculated I component value and Q component value as a soft output of I component of the receiving symbol, and generating a sum of I component value and Q component value as a soft output of Q component of the receiving symbol.

Restoration of bit data from the soft output preferably performed by BPSK demodulation. For example, if the soft output is a value close to 1, it is determined to be '0' bit data, and if the soft output is a value close to -1, it is determined to be '1' bit data. The calculated I component value and Q component value may be fixed point values, and the soft output also may be a fixed point value.

In accordance with another embodiment, the present invention provides a QPSK demodulation method for a soft output in a 3G TDD system which includes calculating a position of a receiving symbol on a constellation, phase-shifting the calculated symbol position, calculating a position of the phase-shifted symbol, and compensating an amplitude of the calculated symbol position. The phase shifting is preferably made at as wide as $45°$ clockwise and the amplitude compensation may be accomplished by performing a scaling operation on every receiving symbol by using, for example, $\sqrt{2}$. If a soft output of the I component of the amplitude-compensated symbol position is close to '1', it may be determined as a soft output of '0' bit data. If a soft output of the Q component of the amplitude-compensated symbol position is close to -1, it may be determined as a soft output of '1' bit data. Alternatives are possible.

In accordance with another embodiment, the present invention provides a QPSK demodulation apparatus for a soft output in a 3G TDD system which, includes a first device for calculating a position of a receiving symbol on a constellation, and a second device for generating a difference value between a calculated I component value and Q component value as a soft output of I component of the receiving symbol and generating the sum of I component value and Q component value as a soft output of Q component of the receiving symbol. If the soft output is close to 1, it may be determined as a soft output of '0' bit data, where if the soft output is close to -1, it may be determined as a soft output of 1 bit data. Alternatives are possible.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

## BRIEF DESCRIPTION OF THE DRAWINGS

Figure 1 is a table showing how bit data are mapped to QPSK symbols in accordance with the related art.

Figure 2 is a diagram showing a QPSK symbol constellation used in accordance with the related art for TDD HCR/LCR.

Figure 3 is a diagram showing a symbol constellation which has been rotated by a predetermined angle (e.g., $45°$) clockwise.

Figure 4A shows an I component value of a symbol according to a position of the symbol based on an imaginary axis in the phase-shifted QPSK symbol constellation.

Figure 4B shows a Q component value of a symbol according to a position of the symbol on the basis of a real axis in the phase-shifted QPSK symbol constellation.

Figure 5 is a diagram showing a construction of a QPSK demodulation apparatus for a soft output in a 3G TDD system in accordance with a preferred embodiment of the present invention.

Figure 6 is a flow chart showing steps included in a QPSK demodulation method for a soft output in a 3G TDD HCR/LCR system in accordance with a preferred embodiment of the present invention.

Figure 7 is a flow chart showing steps included in a QPSK demodulation method for a soft output in a 3G TDD HCR/LCR system in accordance with another preferred embodiment of the present invention.

## DETAILED DESCRIPTION OF THE PREFERRED EMBODIMENTS

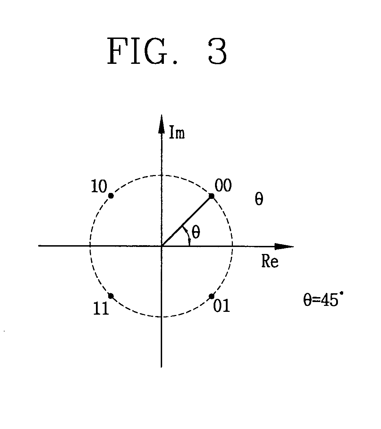

Figure 3 illustrates a phase-shifted symbol constellation in accordance with the present invention. In this embodiment, the phase shift is shown to be 45° clockwise. However, different angles and/or directions of rotation may be used if desired. Using this or other phase-shifted constellations in accordance with the present invention, the I component and Q component can be directly extracted based on a real axis and an imaginary axis.

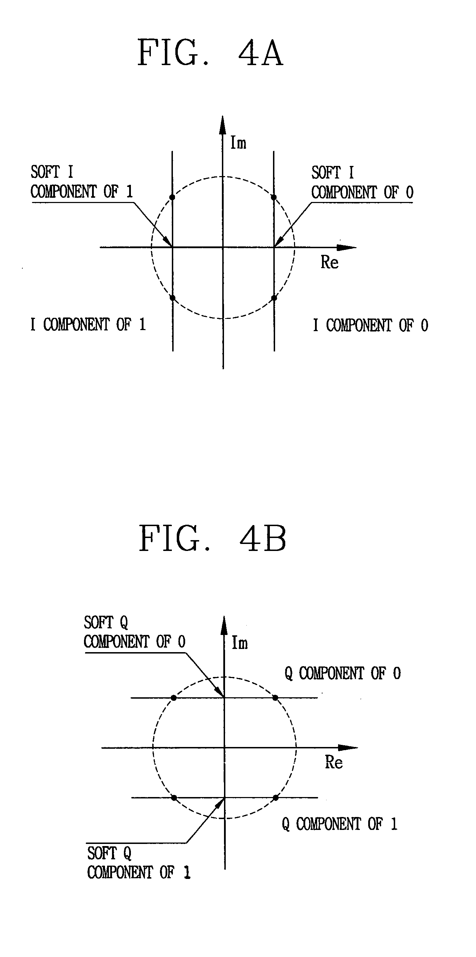

In other words, as shown in Figure 4A, based on the imaginary axis, an I component of a symbol positioned at the right side (first quadrant or fourth quadrant) has a value '0', and an I component of a symbol positioned at the left side (second quadrant or third quandrant) has a value '1'.

As shown in Figure 4B, based on the real axis, a Q component of a symbol positioned at an upper side (first quadrant or second quadrant) has a value '0' and a Q component of a symbol positioned at a lower side (third or fourth quadrant) has a value of '1'. In BPSK modulation, usually, '0' is mapped to '+1' and '1' is mapped to '-1'. The present invention may apply this general BPSK soft modulation to the constellation of Figure 3, or alternatively a different mapping may be used.

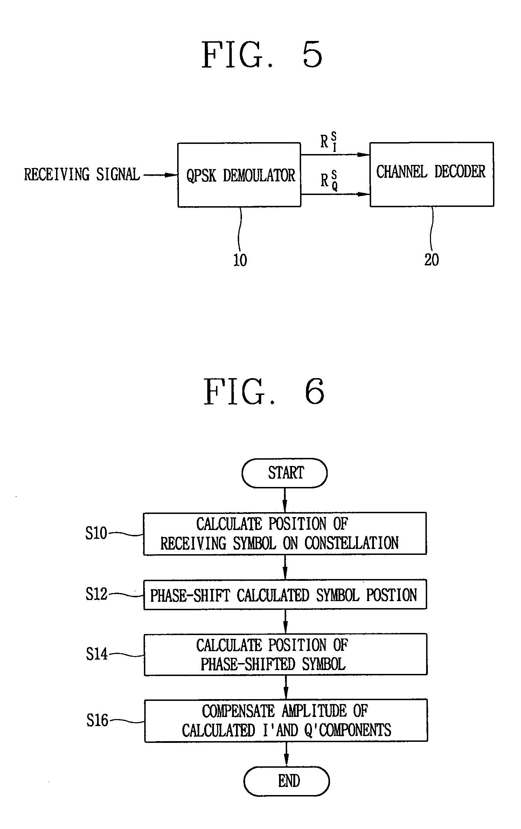

Figure 5 shows a QPSK demodulation apparatus for a soft output in a 3G TDD system in accordance with a preferred embodiment of the present invention. This apparatus includes a QPSK demodulator 10 and a channel decoder 20. The demodulation performs the function of phase-shifting a constellation of a receiving symbol, compensating an amplitude of the phase-shifted receiving symbol, and generating a soft output of the receiving symbol. The channel decoder performs channel decoding using the soft output of the receiving symbol.

Figure 6 shows steps included in a QPSK demodulating method for a soft output in the 3G TDD HCR/LCR system in accordance with one embodiment of the present invention, which is preferably performed by the apparatus of Fig. 5.

Initially, the QPSK demodulator 10 calculates a position of a receiving symbol on the constellation (step S10) and phase-shifts the calculated symbol position by a predetermined angle. This angle may be any angle desired, but for illustrative purposes an angle of 45° clockwise may be used (step S12). The demodulator calculates a position of the phase-shifted symbol (step S14) and then compensates amplitudes of the I' component and Q' component (step S16).

For example, if a transmission symbol (0,1) has been transmitted and there is no noise, a position of a receiving symbol on the constellation is (0,1) and a position of the (0,1) receiving symbol that has been phase-shifted by 45° clockwise is $(1/\sqrt{2},\ 1/\sqrt{2})$. Because the amplitude has been reduced to a certain value due to the phase-shifting, the I' and Q' components must be compensated as much as the reduced value. Thus, multiplying $\sqrt{2}$ 2 to I' and Q' components makes (1,1), to which the general BPSK symbol mapping method to restore (1,1) to '00' bit data. The above example takes the hard output to help understanding.

If a position of a receiving symbol on the constellation is $(R_I, R_Q)$ and the receiving symbol is phase-shifted by 45° clockwise, a position of the phase-shifted receiving symbol can be expressed by equation (2) and equation (3) shown below:

$$R_I{}^S = R_I * \cos(45) - R_Q * \sin(45) \tag{2}$$

$$R_Q{}^S = R_I * \sin(45) + R_Q * \cos(45) \tag{3}$$

A soft output calculated by Equation (2) and Equation (3) may need scaling to be restored to its original receiving amplitude. This is because the soft output becomes smaller than an actual receiving amplitude. Thus, for amplitude compensation, the QPSK demodulator 10 multiplies $\sqrt{2}$ to both Equation (2) and Equation (3) to obtain a soft output of I component like in Equation (4) and a soft output of Q component like in Equation (5).

$$R_I{}^S = R_I - R_Q \tag{4}$$

$$R_Q{}^S = R_I + R_Q \tag{5}$$

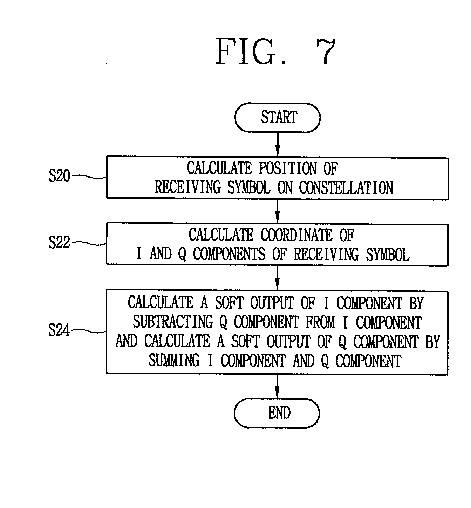

It is noted from Equation (4) and Equation (5) the soft outputs of the receiving symbol can be easily calculated using, for example, a method of Figure 7.

Figure 7 is a flow chart shows steps included in a QPSK demodulation method for a soft output in a 3G TDD HCR/LCR system in accordance with another preferred embodiment of the present invention. In this method, the QPSK demodulator calculates coordinates of I and Q components of a receiving symbol (steps S20 and S22). Next, the demodulator subtracts the Q component from the I component to generate a soft output of the I component, and then adds the I and Q components to generate a soft output of the Q component (step S24). In this manner, the QPSK demodulator can easily obtain the soft outputs from the QPSK symbol through a simple calculation.

As so far described, the QPSK demodulating method and apparatus for soft output in accordance with the present invention has following advantages. For example, when the 3G TDD HCR/LCR system uses QPSK modulation, a receiving unit performs a QPSK demodulation for a soft output by one-time of subtraction and addition. Thus, a complexity of demodulation can be reduced and a performance of a receiving unit can be enhanced.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

**Claims**

1. A QPSK demodulation method for a soft output in a 3G TDD system, comprising:

   calculating a position of a receiving symbol on a constellation; and
   generating a difference value between a calculated I component value and Q component value as a soft output of an I component of the receiving symbol; and
   generating a sum of the I component value and a Q component value as a soft output of Q component of the receiving symbol.

2. The method of claim 1, further comprising:

   performing BPSK demodulation to restore bit data from the soft output.

3. The method of claim 1, wherein if the soft output is a value close to 1, it is determined to be '0' bit data, and wherein if the soft output is a value close to - 1, it is determined to be '1' bit data.

4. The method of claim 1, wherein the calculated I component value and Q component value are fixed point values.

5. The method of claim 4, wherein the soft output is a fixed point value.

6. A QPSK demodulation method for a soft output in a 3G TDD system, comprising:

   calculating a position of a receiving symbol on a constellation;
   phase-shifting the calculated symbol position;
   calculating a position of the phase-shifted symbol; and
   compensating an amplitude of the calculated symbol position.

7. The method of claim 6, wherein phase shifting the calculated symbol position includes phase shifting the position in a range of between 0° and 45° clockwise.

8. The method of claim 6, wherein the amplitude compensation is performed for every receiving symbol.

9. The method of claim 8, wherein the amplitude compensation is performed by scaling using a factor of $\sqrt{2}$.

10. The method of claim 6, wherein if a soft output of an I component of the amplitude-compensated symbol position is close to '1', it is determined as a soft output of '0' bit data, and if a soft output of a Q component of the amplitude-compensated symbol position is close to -1, it is determined as a soft output of '1' bit data.

11. A QPSK demodulation apparatus for a soft output in a 3G TDD system, comprising:

a first device which calculates a position of a receiving symbol on a constellation; and
a second device which generates a difference value between a calculated I component value and Q component value as a soft output of an I component of the receiving symbol and generating a sum of an I component value and Q component value as a soft output of Q component of the receiving symbol.

12. The apparatus of claim 11, wherein if the soft output is close to 1, it is determined to be '0' bit data, where if the soft output is close to -1, it is determined to be 1 bit data.

13. The apparatus of claim 11, wherein the calculated I component value and Q component value are fixed point values.

14. The apparatus of claim 13, wherein the soft output is a fixed point value.

# FIG. 1

| CONSECUTIVE BINARY BIT PATTERN $b_{1,n}^{(k,i)}$ $b_{2,n}^{(k,i)}$ | COMPLEX SYMBOL $\underline{d}_n^{(k,i)}$ |
|---|---|
| 00 | $+j$ |
| 01 | $+1$ |
| 10 | $-1$ |
| 11 | $-j$ |

# FIG. 2

# FIG. 3

# FIG. 4A

# FIG. 4B

# FIG. 5

RECEIVING SIGNAL ⟶ QPSK DEMOULATOR $\quad R_I^S \quad R_Q^S \quad$ CHANNEL DECODER

10      20

# FIG. 6

START

S10 — CALCULATE POSITION OF RECEIVING SYMBOL ON CONSTELLATION

S12 — PHASE-SHIFT CALCULATED SYMBOL POSTION

S14 — CALCULATE POSITION OF PHASE-SHIFTED SYMBOL

S16 — COMPENSATE AMPLITUDE OF CALCULATED I'AND Q'COMPONENTS

END

# FIG. 7

START

S20 — CALCULATE POSITION OF
RECEIVING SYMBOL ON CONSTELLATION

S22 — CALCULATE COORDINATE OF
I AND Q COMPONENTS OF RECEIVING SYMBOL

S24 — CALCULATE A SOFT OUTPUT OF I COMPONENT BY
SUBTRACTING Q COMPONENT FROM I COMPONENT
AND CALCULATE A SOFT OUTPUT OF Q COMPONENT BY
SUMMING I COMPONENT AND Q COMPONENT

END